# EUROPÄISCHE PATENTSCHRIFT

(11) **EP 2 601 480 B1**
(45) Veröffentlichungstag und Bekanntmachung des Hinweises auf die Patenterteilung: **10.09.2014**
(21) Anmeldenummer: 11733807.9
(22) Anmeldetag: 16.07.2011
(51) Int. Cl.: B60W 30/12, B60W 30/18, G01C 21/30, G01C 21/36, G01S 11/12, G01S 19/47

(54) **VERFAHREN UND VORRICHTUNG ZUM BESTIMMEN DER POSITION EINES FAHRZEUGS AUF EINER FAHRBAHN SOWIE KRAFTWAGEN MIT EINER SOLCHEN VORRICHTUNG**
METHOD AND DEVICE FOR DETERMINING THE POSITION OF A VEHICLE ON A CARRIAGEWAY AND MOTOR VEHICLE HAVING SUCH A DEVICE
PROCÉDÉ ET DISPOSITIF POUR DÉTERMINER LA POSITION D'UN VÉHICULE SUR UNE CHAUSSÉE DE CIRCULATION ET AUTOMOBILES ÉQUIPÉES D'UN TEL DISPOSITIF

(30) Priorität: 07.08.2010 DE 102010033729
(43) Veröffentlichungstag der Anmeldung: 12.06.2013
(73) Patentinhaber: Audi AG, 85045 Ingolstadt (DE); Audi Electronics Venture GmbH, 85080 Gaimersheim (DE)
(72) Erfinder: GACKSTATTER, Christina, 85049 Ingolstadt (DE)
(74) Vertreter: Brandt, Kai
(86) Internationale Anmeldenummer: PCT/EP2011/003558
(87) Internationale Veröffentlichungsnummer: WO 2012/019691

(56) Entgegenhaltungen:
- WO-A1-2009/098154
- JP-A- 2004 205 527
- US-A1- 2008 077 322

## Beschreibung

Die Erfindung betrifft ein Verfahren zum Bestimmen der Position eines Fahrzeugs auf einer Fahrbahn sowie eine Vorrichtung hierfür. Des Weiteren betrifft die Erfindung einen Kraftwagen mit einer solchen Vorrichtung.

Elektronische Navigationssysteme unterstützen einen Fahrzeugführer darin, sein Fahrzeug auf einer geeigneten Strecke von einem Ausgangsort zu einem Zielort zu führen. Die globale Position des Fahrzeugs wird hierbei üblicherweise durch einen Satellitensignalsensor, z. B. einen GPS (Global Positioning System) Sensor, ermittelt und auf einer Landkarte auf einem Monitor dargestellt. Die Positionierung des Fahrzeugs auf der schematisch dargestellten Straße erfolgt durch die GPS-Position in Verbindung mit geeigneten Map-Matching-Verfahren. Die Genauigkeit der Positionsbestimmung des Fahrzeugs über die Satellitennavigation beträgt nämlich lediglich etwa 20 m, so dass z. B. eine spurgenaue Angabe der Fahrzeugposition auf der Fahrbahn nicht möglich ist. Die Anzahl der für die jeweilige Position zu erwartenden Spuren auf der Fahrbahn wird beispielsweise aus der digitalen Navigationskarte ausgelesen. Die digitale Karte umfasst hierfür so genannte Kartenattribute, welche Informationen über Kreuzungen, Fahrspurmarkierungen, Verkehrsschilder etc. bereitstellen. Bei Abbiegemanövern kann dem Fahrer so beispielsweise die Zielspur angegeben werden. Neben der Kartendarstellung auf einem Monitor erfolgt in der Regel ergänzend eine Sprachansage.

Aus der DE 10 2009 008 959 A1 ist ein Fahrerassistenzsystem bekannt, welches verschiedenste Informationen zusammenführt, um einen Fahrer bei der Fahrzeugnavigation zu unterstützen. Hierzu erfolgt eine Fusion von Satellitensignalen, Fahrzeugsensorsignalen, Umfeldsensordaten und Verkehrstelematikinformationen, um die Fahrzeugposition mit größerer Genauigkeit anzugeben. Im Rahmen einer Kartenverifikation werden diese Daten mit einer hinterlegten digitalen Karte verglichen und zur Bestimmung der tatsächlichen Fahrzeugposition herangezogen.

Die DE 10 2008 053 531 A1 offenbart ein Verfahren zur Bewertung von Daten einer digitalen Karte, das sich auf karteneigene Qualitätsinformationen oder Messdaten einer Umfeldsensorik stützt. Für die Validierung des Kartenmaterials wird beispielsweise die Anzahl und der Verlauf der Fahrspuren mittels einer Kamera aufgenommen. Zusätzlich können Objekte, z. B. Leitplanken, mit Radarsensoren detektiert werden und diese Informationen für eine Überprüfung der Kartendaten herangezogen werden.

Aus der DE 10 2008 021 380 A1 ist ein Verfahren zum Vorhersagen des Verlaufs einer Fahrbahn vor einem Fahrzeug bekannt. In einem fahrzeugnahen Fahrbahnabschnitt wird der Verlauf der Fahrbahn mittels einer Kamera erfasst, wobei auch Spurmarkierungen erkannt werden können. Ein Positionserkennungssystem erlaubt festzustellen, auf welchem Teilstück der Fahrbahn sich das Fahrzeug befindet und das Fahrerassistenzsystem ermöglicht dann die Spurhaltung. Für einen fahrzeugfernen Fahrbahnabschnitt wird zusätzlich der Fahrbahnverlauf aus einer Karte extrahiert, klassifiziert und vom Fahrerassistenzsystem berücksichtigt.

Aus der DE 10 2006 040 334 A1 ist ein Verfahren bekannt, mit dem sich Fahrspurmarkierungen erfassen lassen. Zur Beschreibung des Fahrspurverlaufs werden mehrere Sensor- und Informationsquellen herangezogen, z. B. GPS-Daten, Radar- und Videosignale sowie digitale Karten. Auch die Bewegung vorausfahrender Fahrzeuge kann erfasst und für die Bestimmung der Fahrspur verwendet werden. Ein mathematisches Verfahren erlaubt die Rekonstruktion der Fahrspur.

Auch die DE 103 49 631 A1 offenbart eine Fahrerassistenzeinrichtung, die Fahrspurinformationen nutzt. Diese Informationen werden aus der Trajektorie anderer Fahrzeuge, dem Verlauf von Fahrbahnrandbegrenzungen, GPS-Daten und der Position bestimmter Objekte gewonnen. Es kommen insbesondere Bildaufnahme und -analyseverfahren zum Einsatz.

Aus der US 2008/0077322 A1 ist eine Navigationsvorrichtung für ein Fahrzeug bekannt. Die Navigationsvorrichtung umfasst eine Positionsbestimmungseinrichtung zum Bestimmen der Position und der Fahrtrichtung des Fahrzeugs. Des Weitern umfasst die Navigationsvorrichtung eine Fahrspurerkennungseinrichtung. Zudem ist eine Einrichtung zum Durchführen eines Map-Matching-Verfahren vorgesehen.

Die WO 2009/098154 A1 beschreibt das Erfassen von zumindest einem Objekt in Umfeld eines Fahrzeugs mit einem Sensor. Dabei wird die mit dem Sensor erfasste Position mit einem Satellitennavigationssystem und einer digitalen Karte abgeglichen.

Schließlich ist in der JP 2004 205527 A ein Navigationssystem für ein Fahrzeug offenbart, das den Fahrer bezüglich seiner Position auf einer Fahrspur einer Fahrbahn informiert. Das Navigationssystem umfasst eine Fahrspurerkennungseinrichtung, eine Positionsbestimmungseinrichtung, ein satellitenbasiertes Ortungssystem und eine digitale Karte.

Es ist Aufgabe der Erfindung, die Bestimmung der Position eines Fahrzeugs auf einer Fahrbahn mit hoher räumlicher Auflösung zu ermöglichen.

Diese Aufgabe wird durch ein Verfahren, welches die Merkmale des Patentanspruchs 1 aufweist, eine Vorrichtung mit den Merkmalen des Patentanspruchs 9 sowie einen Kraftwagen, welcher die Merkmale des Patentanspruchs 10 aufweist, gelöst.

Das erfindungsgemäße Verfahren dient zum Bestimmen der Position eines Fahrzeugs, insbesondere eines Kraftwagens, auf einer Fahrbahn und umfasst mehrere Schritte. Gemäß dem Verfahren wird die Position des Fahrzeugs anhand der Ausgaben eines Satellitensignalsensors, z. B. eines GPS-Sensors, mit einer ersten Genauigkeit bestimmt. Der Satellitensignalsensor kann die empfangenen Satellitensignale dergestalt auswerten, dass er die räumliche Lage des Fahrzeugs mit einer ersten räumlichen Auflösung bestimmt. Diese erste Genauigkeit ist nicht sehr hoch und liegt in der Größenordnung der Fahrbahnbreite selbst.

In einem weiteren erfindungsgemäßen Schritt wird die mit der ersten Genauigkeit bestimmte Position des Fahrzeugs genutzt, um Daten zu einem ersten Fahrzeugumfeld aus einer digitalen Karte zu gewinnen. Eine solche digitale Karte ist z. B. als Landkarte bereitgestellt, die zumindest Informationen über den Verlauf von Fahrbahnen umfasst, und z. B. im Speicher eines elektronischen Navigationsgeräts bereitgestellt wird. Die digitale Karte umfasst insbesondere auch sogenannte Kartendatenattribute. Hierunter sind Informationen über die Anzahl der Fahrspuren auf einer Fahrbahn, Krümmungswerte einer Fahrbahn, Informationen über Fahrspurmarkierungen, usw. zu verstehen. Im zweiten Verfahrensschritt werden die im ersten Schritt über das Satellitensignal gewonnenen Positionsdaten des Fahrzeugs mit den Daten der digitalen Karte abgeglichen. Dies geschieht insbesondere über sogenannte Map-Matching-Verfahren. Auf diese Weise kann die Position eines Fahrzeugs relativ zum Verlauf einer Fahrbahn bestimmt werden. Es kann für diese jeweilige Position ein erstes Fahrzeugumfeld festgelegt werden und es können Daten zu charakteristischen Elementen innerhalb dieses Fahrzeugsumfelds gewonnen werden. Die Daten zu dem ersten Fahrzeugumfeld umfassen dann z. B. Daten zur Anzahl der Fahrspuren an der jeweils momentanen Position des Fahrzeugs, zu erwartende Objekte in der Umgebung des Fahrzeugs für die jeweilige Position, zu erwartenden Kurven etc.

In einem dritten Schritt werden Daten zu Fahrspurmarkierungen in einem zweiten Fahrzeugumfeld mit einem Linienerkennungssensor gewonnen. Fahrspurmarkierungen sind insbesondere auf die Fahrbahn aufgebrachte Linien, die es einem Fahrzeugführer erleichtern, eine bestimmte vorgegebene Fahrspur während der Fahrt auf der Fahrbahn einzuhalten. Fahrspurmarkierungen sind z. B. Fahrbahnrandmarkierungen, unterbrochene Linien, durchgezogene Linien, doppelt durchgezogene Linien, Linien unterschiedlicher Farbgebung und sonstige Markierungen, Zeichen und Symbole, die auf einer Fahrbahn angebracht sind. Eine Fahrspurmarkierung kann auch durch eine Reihe von Noppen, Rückstrahlern, Lämpchen und dergleichen gebildet sein, die auf der Fahrbahn befestigt sind. Der Linienerkennungssensor ist ein Detektor, der in der Lage ist, zumindest einen Teil möglicher Fahrspurmarkierungen auf der Fahrbahn unter bestimmten Bedingung zu erfassen und z. B. durch ein Bilderkennungsverfahren zu identifizieren. Der Linienerkennungssensor erstellt insbesondere ein Linienmodell, das die erkannten Linien anhand ihrer Position, Art, Krümmung und Länge in das Umfeld des Fahrzeugs einordnet. Der Linienerkennungssensor kann insbesondere auch dazu ausgebildet sein, eine Fahrbahn über ihre gesamte Breite zu erfassen.

Gemäß einem vierten Schritt werden Daten zur Eigenbewegung des Fahrzeugs mit einem Fahrdynamiksensor gewonnen. Solche Daten können insbesondere momentane Messwerte als auch über eine bestimmte Zeitspanne gewonnene Messwerte umfassen. Die Daten zur Eigenbewegung können z. B. die Geschwindigkeit, die Beschleunigung, die Gierrate und die Querbeschleunigung des Fahrzeugs charakterisieren. Der Fahrdynamiksensor ist dann z. B. ein Geschwindigkeitssensor, ein Trägheitssensor, ein Gyrosensor oder ein Kompass.

Schließlich werden in einem zusätzlichen fünften Verfahrensschritt oder alternativ im vierten Schritt auch noch Daten zu Objekten in einem dritten Fahrzeugumfeld mit einem Umfeldsensor gewonnen. Ein Umfeldsensor kann z. B. eine Kamera sein, die Objekte im Fahrzeugvorfeld erfasst und durch ein Bilderkennungsverfahren identifiziert. Der Umfeldsensor kann aber z. B. auch ein Infrarotsensor, Ultraschallsensor, Radarsensor etc. sein. Bei den detektierbaren Objekten handelt es sich insbesondere um Objekte, die typischerweise auf oder neben einer Fahrbahn auftreten, z. B. Fahrzeuge, Verkehrsschilder, Leitplanken, Gebäude usw. Durch den Umfeldsensor können die registrierten Objekte z. B. anhand ihrer Position, Geschwindigkeit und Richtung in bestimmte Klassen ("eigene Richtung", "Gegenrichtung", "rechte Randbebauung", "linke Randbebauung") eingeordnet werden.

Unter den Bezeichnungen "erstes Fahrzeugumfeld", "zweites Fahrzeugumfeld" und "drittes Fahrzeugumfeld" sind unterschiedliche Bereiche bzw. Ausschnitte eines allgemeinen Fahrzeugumfelds, also der räumlichen Umgebung des Fahrzeugs, zu verstehen. Es sind alle möglichen Schnittmengen bzw. Überlappungsbereiche des ersten, zweiten und dritten Fahrzeugumfeldes denkbar. Insbesondere können aber auch das erste, zweite und dritte Fahrzeugumfeld zusammenfallen.

Im letzten Verfahrensschritt erfolgt in Abhängigkeit von der Fahrbahnsituation eine Bestimmung der Position des Fahrzeugs mit zumindest fahrspurspezifischer Genauigkeit auf der Fahrbahn. Diese Bestimmung erfolgt, indem sowohl die Daten zu dem ersten Fahrzeugumfeld aus der digitalen Karte als auch die Daten zu den Fahrspurmarkierungen in dem zweiten Fahrzeugumfeld gemeinsam mit weiteren zuvor gewonnenen Daten kombiniert werden. Bei diesen weiteren Daten handelt es sich entweder um die Daten zur Eigenbewegung des Fahrzeugs oder um die Daten zu Objekten in dem dritten Fahrzeugumfeld oder aber um beide Arten von Daten gemeinsam. Die fahrspurspezifische Genauigkeit ist insbesondere größer als die mit dem Satellitensignalsensor erreichte erste Genauigkeit.

Über das Map-Matching ist eine sehr grobe Position des Fahrzeugs auf einer Fahrbahn gegeben. Für diese Position stehen dann Daten zu dem ersten Fahrzeugumfeld bereit, welche ebenfalls in der digitalen Karte abgelegt sind, z. B. Daten zur Anzahl der Fahrspuren an dieser Position. Die Daten zu den Fahrspurmarkierungen erlauben dann z. B. festzustellen, ob sich das Fahrzeug in einer Fahrspur am Rand der Straße oder in einer Fahrspur in der Mitte der Straße befindet. Die beiden Datensätze erlauben, die Relativposition des Fahrzeugs innerhalb der Fahrbahn mit erhöhter Genauigkeit, also größerer räumlicher Auflösung, zu bestimmen.

Um die Genauigkeit der Positionsbestimmung weiter zu verbessern, können dann z. B. Daten zur Bewegung des Fahrzeugs relativ zur Fahrbahn herangezogen werden. Infolge dessen ist es z. B. möglich, einen Fahrspurwechsel festzustellen. Verfolgt man solche Fahrspurwechsel über eine längere Zeit, kann nachvollzogen werden, auf welcher Fahrspur sich das Fahrzeug aktuell befindet. Alternativ oder zusätzlich können auch die Daten zu Objekten in dem dritten Fahrzeugumfeld für die genauere Positionsbestimmung herangezogen werden. Beispielsweise kann durch die Detektion anderer Fahrzeuge auf eine charakteristische Fahrspur dieser Fahrzeuge geschlossen werden, was wiederum Rückschlüsse auf den Verlauf der Fahrspuren auf einer Fahrbahn zulässt.

Insbesondere wird für jede eingehende Datenart (Daten aus der digitalen Karte, Daten zu Fahrspurmarkierungen, Daten zur Eigenbewegung, Daten zu Objekten) separat ein Umfeldmodell erstellt. Die Daten aus der digitalen Karte liefern die Basis des Algorithmus. Anschließend werden redundante, ergänzende und komplementäre Daten zu Fahrspurmarkierungen mit heranzogen und mit den Daten aus der digitalen Karte verarbeitet. Die so erhaltenen Daten werden dann wiederum mit den Daten zur Eigenbewegung des Fahrzeugs und/oder den Daten zu Objekten kombiniert. Anhand der drei Umfeldmodelle kann also durch Fusion und Interpretation die aktuell befahrene Fahrspur bestimmt und plausibilisiert werden.

Das erfindungsgemäße Verfahren kombiniert also die von einem Satellitensignalsensor, einer digitalen Karte, einem Linienerkennungssensor, einem Fahrdynamiksensor und einem Umfeldsensor bereitgestellten Daten auf geschickte Art und Weise, um hierdurch die Position des Fahrzeugs auf der Fahrbahn mit zumindest fahrspurspezifischer Genauigkeit zu ermitteln. Diese Kombination erfolgt insbesondere dadurch, dass ausgehend von den Satellitensignaldaten und der digitalen Karte sukzessive weitere der obengenannten Datensätze mitberücksichtigt werden und hierdurch die Fahrzeugposition mit zunehmender räumlicher Auflösung bestimmt wird.

Durch die erfindungsgemäße Nutzung und Kombination von Daten können einem Fahrzeugführer exaktere und detailliertere Informationen zur Verfügung gestellt werden. Die von einem Navigationssystem ausgegebenen Fahranweisungen lassen sich so präzisieren. Beispielsweise erhält der Fahrzeugführer frühzeitig eine Information darüber, ob er sich auf einer Spur für Geradeausfahrt oder auf einer Abbiegespur befindet. Es können z. B. auch Warnhinweise ausgegeben werden, wenn sich der Fahrer auf einer Fahrspur für Gegenverkehr befindet.

Erfindungsgemäß wird im Rahmen des Verfahrens auch die Anzahl der Fahrspuren auf der Fahrbahn bestimmt. Dies ist z. B. dann möglich, wenn Daten zur Eigenbewegung des Fahrzeugs mit den Daten aus der digitalen Karte und den Daten zu den Fahrspurmarkierungen kombiniert werden. Wenn z. B. innerhalb eines kurzen Zeitraums sehr viele Fahrspurwechsei erfolgen, kann über eine Detektion der Eigenbewegung auf die Anzahl vorhandener Fahrspuren rückgeschlossen werden. Ist der Linienerkennungssensor z. B. in der Lage, die gesamte Fahrbahn zu erfassen, können Rückschlüsse auf die Gesamtzahl der Fahrspuren gezogen werden. Der Fahrzeugführer erfährt neben der exakten Position seines Fahrzeugs auf der Fahrbahn auch die Gesamtzahl der vorhandenen Fahrspuren. Auch anhand der detektierten Objekte kann die Anzahl der Fahrspuren bestimmt werden. Es lassen sich noch detailliertere Fahranweisungen an den Fahrer ausgeben, so dass er die allgemeine Verkehrslage besser einschätzen kann.

Besonders bevorzugt ist es hierbei, wenn die Information über die Anzahl der Fahrspuren dazu verwendet wird, Daten in der digitalen Karte zu korrigieren. Die Daten zu einer Anzahl an Fahrspuren, die in einer digitalen Karte abgelegt sind, können veraltet sein und die tatsächliche Situation nicht korrekt wiedergeben. Diese Korrektur kann beispielsweise darin bestehen, dass lediglich die an einen Fahrzeugführer ausgegebenen Informationen modifiziert werden. Das ist beispielsweise dann von Vorteil, wenn die Anzahl an Fahrspuren nicht permanent verändert ist, sondern nur durch temporäre Ereignisse beeinflusst wird (z. B. Baustelle, Verkehrsunfall). Der Fahrer erhält dann eine sehr aktuelle Information und wird nicht durch falsche Daten in die Irre geführt. Es kann aber auch vorgesehen sein, dass die Daten in der digitalen Karte permanent korrigiert werden und den tatsächlichen Verhältnissen angepasst werden. Dies kann z. B. dann vorgesehen sein, wenn eine Fahrbahn dauerhaft baulich verändert wurde.

Erfindungsgemäß wird die Anzahl der Fahrspuren gemäß einem Verfahren mit den folgenden zusätzlichen Schritten bestimmt: Aus den Daten zu Fahrspurmarkierungen werden Daten zu einer Fahrspurbreite gewonnen. Aus den Daten zu Objekten werden Daten zur Fahrbahnbreite gewonnen. Beispielsweise wird ein Objekt am linken Fahrbahnrand registriert und ein anderes Objekt am rechten Fahrbahnrand festgestellt. Befinden sich beide Objekte auf etwa gleicher Höhe kann auf die Fahrbahnbreite geschlossen werden. Schließlich wird die Anzahl der Fahrspuren auf der Fahrbahn aus den Daten zur Fahrbahnbreite und den Daten zur Spurbreite bestimmt. Im einfachsten Fall identisch breiter Fahrspuren kann beispielsweise die Fahrbahnbreite durch die Fahrspurbreite dividiert werden und man erhält direkt die Anzahl der Fahrspuren. Dadurch, dass auch die über das Satellitensignal bestimmte Position sowie die Daten aus der digitalen Karte miteinbezogen werden, lässt sich auch im Falle von Fahrspuren nicht identischerBreite die Anzahl der Fahrspuren sicher bestimmen. Die Daten zu Fahrspurmarkierungen können auch Informationen über die Art der Linien umfassen. Aus einer durchgezogenen Linie kann man beispielsweise schließen, dass diese die Fahrbahn begrenzt. Gestrichelte Linien deuten dagegen auf eine weitere Spur hin. Diese Informationen lassen sich ebenfalls heranziehen, um die Fahrspurbreite, bzw. die Anzahl der Fahrspuren zu bestimmen. Auch für bewegte Objekte können aussagekräftige Daten gewonnen werden. Beispielsweise kann man andere Fahrzeuge und deren Bewegungsrichtung detektieren. Wenn man weiß, in welche Richtung die Fahrzeuge auf den Spuren fahren, kann man ebenfalls die Anzahl der Spuren bestimmen.

Weiterhin ist es bevorzugt, dass eine Information an einen Fahrzeugführer ausgegeben wird, welche zumindest auf der fahrspurgenauen Position des Fahrzeugs basiert. Eine solche Information ist insbesondere eine Angabe über eine Anzahl zu wechselnder Fahrspuren. Dem Fahrer können so sehr spezifische Fahranweisungen gegeben werden und die Fahrzeugnavigation wird einfach und sicher. Der Fahrer erhält beispielsweise eine Fahranweisung darüber, wie viele Spurwechsel er durchführen muss, um zu einer gewünschten Ausfahrt zu gelangen. Dies ist insbesondere dann von erheblichem Vorteil, wenn die Anzahl der tatsächlich vorhandenen Fahrspuren nicht mit der in der digitalen Karte abgelegten Anzahl erwarteter Fahrspuren übereinstimmt. Ohne das hier vorliegende Verfahren würden die Fahranweisungen durch das Navigationssystem falsch sein, den Fahrer verwirren und gegebenenfalls eine gefährliche Verkehrssituation provozieren.

Weiterhin ist es bevorzugt wenn wenigstens eine Fahrspurmarkierung gesucht wird, die von einer Fahrbahnrandmarkierung verschieden ist. Wenn man auf einer äußeren Spur fährt, ist es gegebenenfalls ausreichend, ausschließlich die Fahrbahnrandmarkierung zu detektieren, um die eigene Fahrspur zu identifizieren. Insbesondere auf einer Fahrbahn mit sehr vielen Fahrspuren ist eine ausschließliche Detektion von Fahrbahnrandmarkierungen nicht immer ausreichend, um die Position eines Fahrzeugs fahrspurspezifisch zu bestimmen und die Anzahl der vorhandenen Fahrspuren korrekt zu erfassen. Dies ist insbesondere dann der Fall, wenn man auf einer mittleren Fahrspur fährt. Es ist deshalb von erheblichem Vorteil, wenn Linien, die in der Mitte einer Fahrbahn verlaufen, identifiziert werden.

Vorzugsweise werden aus der digitalen Karte solche Daten zum ersten Fahrzeugumfeld gewonnen, welche in einer Gruppe enthalten sind, die umfasst:
das Fahrzeug momentan befindet und auch die Anzahl an Fahrspuren auf der Fahrbahn kann gegebenenfalls ermittelt werden.

Vorzugsweise werden solche Daten zu Objekten gewonnen, welche in einer Gruppe enthalten sind, die umfasst:
- Angaben zu einer Position eines Objekts. Dies kann eine zeitlich feste (z. B. bei Randbebauung) oder variable (z. B. bei anderen Fahrzeugen) Position sein.
- Angaben zu einer Geschwindigkeit eines Objekts. Dies ist insbesondere bei Fahrzeugen von Interesse.
- Angaben zu einer Art eines Objekts.

Eine erfindungsgemäße Vorrichtung dient zur Bestimmung der Position eines Fahrzeugs auf einer Fahrbahn und umfasst:
- Einen Satellitensignalsensor, der Signale zur Bestimmung der Position des Fahrzeugs mit einer ersten Genauigkeit bereitstellt.;
- Eine digitale Karte mit Daten zu einem ersten Fahrzeugumfeld für die mit der ersten Genauigkeit bestimmte Position;
- Einen Fahrdynamiksensor, der Daten zur Eigenbewegung des Fahrzeugs bereitstellt; und
- Einen Umfeldsensor, der Daten zu Objekten in einem dritten Fahrzeugumfeld bereitstellt.

Die Vorrichtung umfasst darüber hinaus einen Linienerkennungssensor, der Daten zu Fahrspurmarkierungen in einem zweiten Fahrzeugumfeld bereitstellt, und eine Positionsbestimmungseinheit, die dazu ausgebildet ist, die Daten zu dem ersten Fahrzeugumfeld aus der digitalen Karte und die Daten zu den Fahrspurmarkierungen in dem zweiten Fahrzeugumfeld mit den Daten zur Eigenbewegung des Fahrzeugs und/oder den Daten zu Objekten in dem dritten Fahrzeugumfeld zu kombinieren und so die Position des Fahrzeugs mit zumindest fahrspurspezifischer Genauigkeit auf der Fahrbahn zu bestimmen. Die Positionsbestimmungseinheit ist insbesondere ein Mikrocomputer bzw. Rechner, welcher geeignet ist, die bereitgestellten Daten zu verarbeiten. Sie wird insbesondere in einem elektronischen Navigationssystem oder in einer Fahrerassistenzeinrichtung bereitgestellt. Erfindungsgemäß kann auch die Anzahl der Fahrspuren mit einer solchen Vorrichtung bestimmt werden.

Fahrzeug momentan befindet und auch die Anzahl an Fahrspuren auf der Fahrbahn kann gegebenenfalls ermittelt werden.

Vorzugsweise werden solche Daten zu Objekten gewonnen, welche in einer Gruppe enthalten sind, die umfasst:
- Angaben zu einer Position eines Objekts. Dies kann eine zeitlich feste (z. B. bei Randbebauung) oder variable (z. B. bei anderen Fahrzeugen) Position sein.
- Angaben zu einer Geschwindigkeit eines Objekts. Dies ist insbesondere bei Fahrzeugen von Interesse.
- Angaben zu einer Art eines Objekts.

Eine erfindungsgemäße Vorrichtung dient zur Bestimmung der Position eines Fahrzeugs auf einer Fahrbahn und umfasst:
- Einen Satellitensignalsensor, der Signale zur Bestimmung der Position des Fahrzeugs mit einer ersten Genauigkeit bereitstellt.;
- Eine digitale Karte mit Daten zu einem ersten Fahrzeugumfeld für die mit der ersten Genauigkeit bestimmte Position;
- Einen Fahrdynamiksensor, der Daten zur Eigenbewegung des Fahrzeugs bereitstellt; und
- Einen Umfeldsensor, der Daten zu Objekten in einem dritten Fahrzeugumfeld bereitstellt.

Die Vorrichtung umfasst darüber hinaus einen Linienerkennungssensor, der Daten zu Fahrspurmarkierungen in einem zweiten Fahrzeugumfeld bereitstellt, und eine Positionsbestimmungseinheit, die dazu ausgebildet ist, die Daten zu dem ersten Fahrzeugumfeld aus der digitalen Karte und die Daten zu den Fahrspurmarkierungen in dem zweiten Fahrzeugumfeld mit den Daten zur Eigenbewegung des Fahrzeugs und/oder den Daten zu Objekten in dem dritten Fahrzeugumfeld zu kombinieren und so die Position des Fahrzeugs mit zumindest fahrspurspezifischer Genauigkeit auf der Fahrbahn zu bestimmen. Die Positionsbestimmungseinheit ist insbesondere ein Mikrocomputer bzw. Rechner, welcher geeignet ist, die bereitgestellten Daten zu verarbeiten. Sie wird insbesondere in einem elektronischen Navigationssystem oder in einer Fahrerassistenzeinrichtung bereitgestellt. Insbesondere kann auch die Anzahl der Fahrspuren mit einer solchen Vorrichtung bestimmt werden.

Ein erfindungsgemäßer Kraftwagen umfasst eine erfindungsgemäße Vorrichtung.

Die mit Bezug auf das erfindungsgemäße Verfahren vorgestellten bevorzugten Ausführungsformen und deren Vorteile gelten entsprechend für die erfindungsgemäße Vorrichtung und den erfindungsgemäßen Kraftwagen.

Weitere Merkmale der Erfindung ergeben sich aus den Ansprüchen, den Figuren und der Figurenbeschreibung. Die vorstehend in der Beschreibung genannten Merkmale und Merkmalskombinationen als auch die in der Figurenbeschreibung genannten Merkmale und Merkmalskombinationen und/oder die in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Anhand von Ausführungsbeispielen wird die Erfindung im Folgenden näher erläutert. Es zeigen:

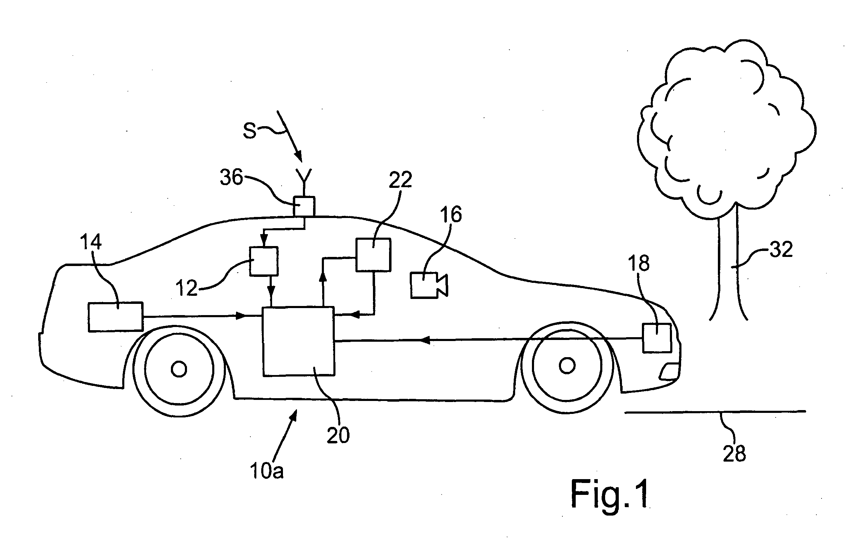

- Fig. 1: einen Kraftwagen mit einer schematisch dargestellten Ausführungsform der erfindungsgemäßen Vorrichtung;
- Fig. 2: eine schematische Draufsicht auf eine mehrspurige Fahrbahn;
- Fig. 3a: ein Ablaufschema des erfindungsgemäßen Verfahrens gemäß einem ersten Ausführungsbeispiel;
- Fig. 3b: ein Ablaufschema des erfindungsgemäßen Verfahrens gemäß einem zweiten Ausführungsbeispiel; und
- Fig. 3c: ein Ablaufschema des erfindungsgemäßen Verfahrens gemäß einem dritten Ausführungsbeispiel.
In den Figuren sind gleiche oder funktionsgleiche Elemente mit den gleichen Bezugszeichen versehen.

Ein Kraftwagen 10a ist mit einer Vorrichtung zur Bestimmung der Fahrzeugposition ausgerüstet. Die Vorrichtung umfasst eine digitale Karte 12, einen Fahrdynamiksensor 14, einen Umfeldsensor 16, einen Linienerkennungssensor 18, einen Satellitensignalsensor 36 sowie eine Positionsbestimmungseinheit 20. Der Satellitensignalsensor 36 empfängt ein Satellitensignal S über eine Antenne und bestimmt hieraus die Position des Kraftwagens 10a mit einer ersten Genauigkeit. Es erfolgt eine Ausgabe von Daten bzw. eine Weiterleitung von Signalen an die digitale Karte 12, in der die ermittelte Position in Einklang mit Navigationskartendaten gebracht wird. Die digitale Karte 12 ist auf einem Datenspeicher abgelegt. Zu der jeweiligen Position stehen in der digitalen Karte Kartendatenattribute zur Verfügung, die Informationen über das Fahrzeugumfeld bereitstellen. Die Daten werden an die Positionsbestimmungseinheit 20 weitergegeben. Alternativ kann auch vorgesehen sein, dass die Ausgaben des Satellitensignalsensors 36 sowie die Daten der digitalen Karte 12 direkt an die Positionsbestimmungseinheit 20 weitergegeben werden und dort verarbeitet werden.

Der Fahrdynamiksensor 14 erfasst eine Eigenbewegung des Kraftwagens 10a und gibt die gewonnenen Daten an die Positionsbestimmungseinheit 20 weiter. Der Linienerkennungssensor 18 erkennt eine auf einer Fahrbahn angebrachte Fahrspurmarkierung 28 und gibt hierzu gewonnene Daten an die Positionsbestimmungseinheit 20 weiter. Ein Objekt, z. B. ein Baum 32, wird von dem Umfeldsensor 16 erfasst und erkannt, so dass Daten zu dem Baum 32 an die Positionsbestimmungseinheit 20 weitergeleitet werden. Die Positionsbestimmungseinheit 20 verarbeitet zumindest einen Teil der eingehenden Daten dahingehend, dass sie die Position des Kraftwagens 10a zumindest fahrspurspezifisch bestimmt. Im Ausführungsbeispiel wird auch die Anzahl der Fahrspuren auf der Fahrbahn anhand der eingehenden Sensorsignale und Navigationskartendaten ermittelt. Die Positionsbestimmungseinheit 20 umfasst einen Mikrocomputer, der die eingehenden Daten unter Zuhilfenahme von Computersoftware verarbeitet und auf diese Weise Daten generiert, die an ein Navigationsgerät 22 weitergegeben werden. Das Navigationsgerät 22 umfasst Bedienelemente für die Interaktion mit einem Führer des Kraftwagens 10a, einen Monitor zur graphisch aufbereiteten Darstellung der empfangenen Daten sowie einen Lautsprecher zur akustischen Ausgabe von Fahranweisungen.

Die Geräte 12, 14, 16, 18, 20, 22 und 36 sind im Ausführungsbeispiel als separate Geräte dargestellt. Sie können jedoch auch baulich zusammengefasst vorliegen. Insbesondere können die Positionsbestimmungseinheit 20, das Navigationsgerät 22 sowie die digitale Karte 12 in einem gemeinsamen Gerät mit einem einheitlichen Gehäuse zusammengefasst sein und beispielsweise im Innenraum des Kraftwagens 10a angebracht sein.

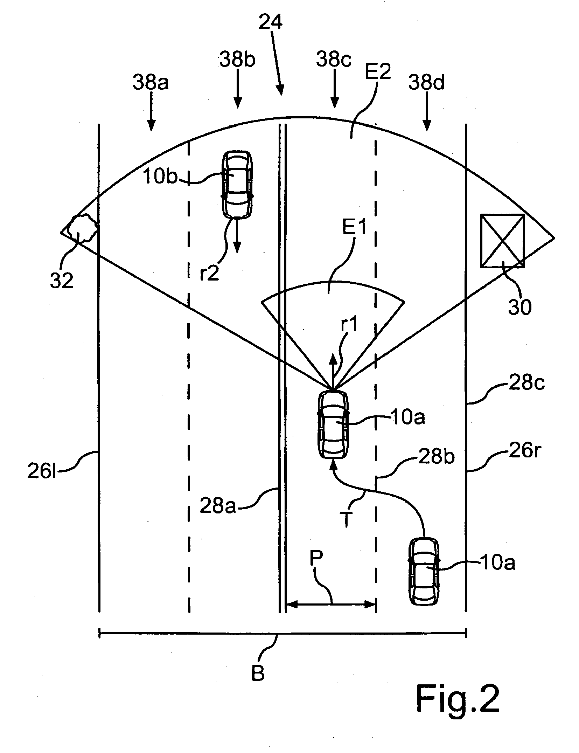

Fig. 2 zeigt eine Draufsicht auf eine Fahrbahn 24 der Fahrbahnbreite B mit vier Fahrspuren 38a bis 38d. Die Fahrspur 38c hat beispielsweise die Spurbreite P. Die Fahrbahn 24 ist durch einen linken Fahrbahnrand 26l und einen rechten Fahrbahnrand 26r begrenzt. Auf der Fahrbahn 24 befinden sich mehrere Fahrspurmarkierungen, z. B. die Fahrspurmarkierungen 28a (durchgezogenen Doppellinie) und 28b (einfach unterbrochenen Linie). Die Fahrspurmarkierungen 28a und 28b begrenzen die Fahrspur 38c nach links bzw. nach rechts. Auch der rechte Fahrbahnrand 26r ist durch eine Fahrspurmarkierung 28c markiert, welche eine Fahrbahnrandmarkierung darstellt.

Die Fahrbahn 24 ist eine Fahrbahn mit Rechtsverkehr, d. h. ein Kraftwagen 10b bewegt sich in Fahrtrichtung r2 in der Darstellung der Fig. 2 auf der Fahrspur 38b nach unten. Ein Kraftwagen 10a fährt in die entgegengesetzte Fahrtrichtung r1 zunächst auf Fahrspur 38d und zu einem späteren Zeitpunkt auf Fahrspur 38c. Der Kraftwagen 10a wechselt also im Laufe seiner Fahrt die Fahrspur gemäß einer Trajektorie T. Er überquert dabei die Fahrspurmarkierung 28b. Auch der Kraftwagen 10b bewegt sich; seine Trajektorie ist jedoch nicht eingezeichnet.

Im Ausführungsbeispiel hat der Linienerkennungssensor 18 des Kraftwagens 10a einen Erfassungsbereich E1, so dass die Fahrspurmarkierungen 28a und 28b detektiert werden. Der Linienerkennungssektor 18 erkennt, dass beide Fahrspurmarkierungen 28a und 28b gerade Linien sind, die in der Farbe Weiß auf der Fahrbahn 24 aufgemalt sind. Er ist zudem in der Lage, zwischen der doppelt durchgezogenen Linie der Fahrspurmarkierung 28a und der einfach unterbrochenen Linie der Fahrspurmarkierung 28b zu unterscheiden. Der Linienerkennungssensor 18 kann aus der Position der Fahrspurmarkierungen 28a und 28b die Spurbreite P der Fahrspur 38c ermitteln.

Der Umfeldsensor 16 hat einen Erfassungsbereich E2, welcher vom Erfassungsbereich E1 verschieden ist. Die Erfassungsbereiche E1 und E2 decken ein zweites bzw. drittes Fahrzeugumfeld ab. Im Erfassungsbereich E2 liegen der Baum 32, der Kraftwagen 10b sowie ein Haus 30, welche vom Umfeldsensor 16 als Objekte detektiert werden können. Der Umfeldsensor 16 klassifiziert den Baum 32 als ein Objekt, welches typischerweise an einem Fahrbahnrand vorhanden ist. Auch das Haus 30 wird als typische Randbebauung klassifiziert. Die Objekte 32 und 30 erlauben dem Umfeldsensor 16 damit, die Identifikation des linken Fahrbahnrands 261 bzw. des rechten Fahrbahnrands 26r und hieraus die Ermittlung der Fahrbahnbreite B. Über eine Bildverarbeitung kann der Umfeldsensor 16 den Kraftwagen 10b als solchen identifizieren und seine Fahrtrichtung r2 erkennen.

Der Fahrdynamiksensor 14 misst die Fahrgeschwindigkeit und die Querbeschleunigung des Kraftwagens 10a und kann ausgehend von diesen Informationen die Trajektorie T rekonstruieren. Es wird folglich erkannt, dass ein Spurwechsel von der Fahrspur 38d auf die Fahrspur 38c stattgefunden hat.

Die so gewonnenen Daten über die Fahrspurmarkierungen 28a und 28b, die Objekte 32, 30 und 10b sowie über die Trajektorie T werden an die Positionsbestimmungseinheit 20 weitergegeben, wo sie mit den Navigationsdaten der digitalen Karte 12 und den Positionsdaten des Satellitensignalsensors 36 kombiniert und verarbeitet werden. Die Position des Kraftwagens 10a kann auf der Fahrbahn 24 fahrspurgenau bestimmt werden und auch die Anzahl der Fahrspuren wird ermittelt.

Dem Fahrzeugführer kann dann auf dem Navigationsgerät 22 die Information bereitgestellt werden, dass die Fahrbahn 24 insgesamt vier Fahrspuren hat, dass sich sein Kraftwagen 10a momentan auf der Fahrspur 38c befindet, dass er sich auf der linken der beiden Fahrspuren in Fahrtrichtung befindet, dass sich links von ihm zwei Fahrspuren 38a und 38b mit Gegenverkehr befinden, dass die Fahrspurmarkierung 28a links von ihm symbolisiert, dass diese Fahrspur nicht überfahren werden darf, und dass er sich zuvor auf einer Fahrspur befunden hat, welche sich am rechten Fahrbahnrand 26r befindet. Überschreitet der Kraftwagen 10a im weiteren Fahrverlauf die Fahrspurmarkierung 28a, wird über das Navigationsgerät 22 eine Warnung an den Fahrzeugführer ausgegeben.

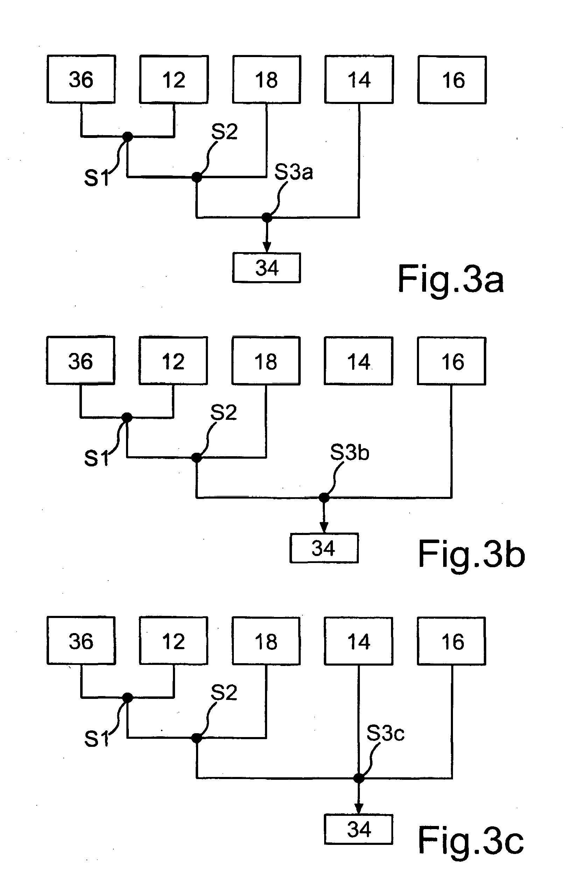

Drei mögliche Ausführungsbeispiele des erfindungsgemäßen Verfahrens sind in den Fig. 3a bis 3c dargestellt. Gemäß dem ersten Ausführungsbeispiel der Fig. 3a werden im Schritt S1 Daten zur Position des Kraftwagens 10a, welche mittels des Satellitensignalsensors 36 gewonnen wurden, mit Daten aus der digitalen Karte 12 dergestalt kombiniert, dass Daten zu einem ersten Fahrzeugumfeld ausgegeben werden. Diese Daten werden in einem Schritt S2 mit Daten zu Fahrspurmarkierungen kombiniert, welche vom Linienerkennungssensor 18 bereitgestellt werden. Die so erhaltenen Daten werden mit Daten zu Eigenbewegung des Kraftwagens 10a (bereitgestellt durch den Fahrdynamiksensor 14) erneut kombiniert (Schritt S3a), so dass die erhaltenen Daten die fahrspurgenaue Position des Kraftwagens 10a wiedergeben. Diese Daten werden dann dem Fahrzeugführer auf einer Ausgabeeinheit 34 grafisch und/oder akustisch aufbereitet bereitgestellt. Die Ausgabeeinheit 34 ist insbesondere Teil des Navigationsgerätes 22.

Im Ausführungsbeispiel der Fig. 3b werden dagegen die vom Fahrdynamiksensor 14 bereitgestellten Daten zur Eigenbewegung des Kraftwagens 10a nicht berücksichtigt, sondern es erfolgt in einem Schritt S3b eine Kombination mit den Daten, die vom Umfeldsensor 16 im Hinblick auf die Objekte im Erfassungsbereich E2 geliefert werden.

Im Ausführungsbeispiel der Fig. 3c werden sowohl die vom Fahrdynamiksensor 14 bereitgestellten Daten als auch die vom Umfeldsensor 16 gelieferten Daten mit den aus Schritt S2 resultierenden Daten in einem Schritt S3c wiederum so kombiniert, dass die Position des Kraftwagens 10a fahrspurgenau ermittelt wird.

## Patentansprüche

1. Verfahren zum Bestimmen der Position eines Fahrzeugs auf einer Fahrbahn (24), insbesondere eines Kraftwagens (10a), mit den Schritten:
- Bestimmen der Position des Fahrzeugs (10a) mit einer ersten Genauigkeit anhand von Ausgaben eines Satellitensignalsensors (36); und
- Gewinnen von Daten zu einem ersten Fahrzeugumfeld für die mit der ersten Genauigkeit bestimmte Position aus einer digitalen Karte (12); und
- Gewinnen von Daten zu Fahrspurmarkierungen (28, 28a, 28b, 28c) in einem zweiten Fahrzeugumfeld (E1) mit einem Linienerkennungssensor (18); und
- Gewinnen von Daten zur Eigenbewegung (T) des Fahrzeugs (10a) mit einem Fahrdynamiksensor (14); und
- Bestimmen der Anzahl von Fahrspuren (38a, 38b, 38c, 38d) auf der Fahrbahn (24); und
- Bestimmen der Position des Fahrzeugs (10a) mit zumindest fahrspurspezifischer Genauigkeit auf der Fahrbahn (24)
**gekennzeichnet durch** die Schritte:
- Gewinnen von Daten zu Objekten (30, 32, 10b) in einem dritten Fahrzeugumfeld (E2) mit einem Umfeldsensor (16); und
- Bestimmen der Position des Fahrzeugs (10a) **durch** Kombination
- der Daten zu dem ersten Fahrzeugumfeld aus der digitalen Karte (12) und
- der Daten zu den Fahrspurmarkierungen (28, 28a, 28b, 28c) in
dem zweiten Fahrzeugumfeld (E1)
mit
- den Daten zur Eigenbewegung (T) des Fahrzeugs (10a) und
- den Daten zu Objekten (30, 32, 10b) in dem dritten Fahrzeugumfeld (E2) in Abhängigkeit von der Fahrbahnsituation; und
- Gewinnen von Daten zu einer Spurbreite (P) aus den Daten zu Fahrspurmarkierungen (28, 28a, 28b, 28c);
- Gewinnen von Daten zur Fahrbahnbreite (B) aus den Daten zu Objekten (30, 32, 10b); und
- Bestimmen und Ausgeben der Anzahl der Fahrspuren (38a, 38b, 38c, 38d) auf der Fahrbahn (24) aus den Daten zur Fahrbahnbreite (B) und zur Spurbreite (P).

2. Verfahren nach Anspruch 1,
**dadurch gekennzeichnet, dass**
die Information über die Anzahl der Fahrspuren (38a, 38b, 38c, 38d) dazu verwendet wird, Daten in der digitalen Karte (12) zu korrigieren.

3. Verfahren nach einem der vorhergehenden Ansprüche,
**dadurch gekennzeichnet, dass**
eine auf der zumindest fahrspurgenauen Position des Fahrzeugs (10a) basierende Information an einen Fahrzeugführer ausgegeben wird, insbesondere eine Information über eine Anzahl zu wechselnder Fahrspuren (38a, 38b, 38c, 38d).

4. Verfahren nach einem der vorhergehenden Ansprüche,
**dadurch gekennzeichnet, dass**
wenigstens eine Fahrspurmarkierung (28a, 28b) gesucht wird, die von einer Fahrbahnrandmarkierung (28c) verschieden ist.

5. Verfahren nach einem der vorhergehenden Ansprüche,
**dadurch gekennzeichnet, dass**
aus der digitalen Karte (12) solche Daten zum ersten Fahrzeugumfeld gewonnen werden, die wenigstens eine Angabe zur Anzahl an Fahrspuren (38a, 38b, 38c, 38d) und/oder zur Krümmung der Fahrbahn (24) und/oder zu Markierungen (28, 28a, 28b, 28c) auf der Fahrbahn (24) und/oder zu baulichen Besonderheiten auf der Fahrbahn (24) umfassen.

6. Verfahren nach einem der vorhergehenden Ansprüche,
**dadurch gekennzeichnet, dass**
solche Daten zu Fahrspurmarkierungen (28, 28a, 28b, 28c) gewonnen werden, die wenigstens eine Angabe zu einer Position und/oder einer Art und/oder einer Krümmung und/oder einer Länge einer Fahrspurmarkierung (28, 28a, 28b, 28c) umfassen.

7. Verfahren nach einem der vorhergehenden Ansprüche,
**dadurch gekennzeichnet, dass**
solche Daten zur Eigenbewegung (T) des Fahrzeugs (10a) gewonnen werden, die Messdaten umfassen, welche zu verschiedenen Zeitpunkten aufgenommen wurden.

8. Verfahren nach einem der vorhergehenden Ansprüche,
**dadurch gekennzeichnet, dass**
solche Daten zu Objekten (30, 32, 10b) gewonnen werden, die wenigstens eine Angabe zu einer Position und/oder einer Geschwindigkeit und/oder einer Art eines Objekts (30, 32, 10b) umfassen.

9. Vorrichtung zur Bestimmung der Position eines Fahrzeugs auf einer Fahrbahn (24), insbesondere eines Kraftwagens (10a), mit:
- einem Satellitensignalsensor (36), der Signale zur Bestimmung der Position des Fahrzeugs (10a) mit einer ersten Genauigkeit bereitstellt;
- einer digitalen Karte (12) mit Daten zu einem ersten Fahrzeugumfeld für die mit der ersten Genauigkeit bestimmte Position;
- einen Linienerkennungssensor (18), der Daten zu Fahrspurmarkierungen (28, 28a, 28b, 28c) in einem zweiten Fahrzeugumfeld (E1) bereitstellt;
- einem Fahrdynamiksensor (14), der Daten zur Eigenbewegung (T) des Fahrzeugs (10a) bereitstellt;
- einer Vorrichtung, die eine Anzahl der Fahrspuren (38a, 38b, 38c, 38d) auf der Fahrbahn (24) bestimmt; und
- einer Positionsbestimmungseinheit (20), die dazu ausgebildet ist, die Position des Fahrzeugs (10a) mit zumindest fahrspurspezifischer Genauigkeit auf der Fahrbahn (24) zu bestimmen;
**gekennzeichnet durch**
- einen Umfeldsensor (16), der Daten zu Objekten (30, 32, 10b) in einem dritten Fahrzeugumfeld (E2) bereitstellt; wobei
- die Positionsbestimmungseinheit (20) dazu ausgebildet ist, die Daten zu dem ersten Fahrzeugumfeld aus der digitalen Karte (12) und die Daten zu den Fahrspurmarkierungen (28, 28a, 28b, 28c) in dem zweiten Fahrzeugumfeld (E1) mit den Daten zur Eigenbewegung (T) des Fahrzeugs (10a) und den Daten zu Objekten (30, 32, 10b) in dem dritten Fahrzeugumfeld (E2) zu kombinieren und so die Position des Fahrzeugs (10a) zu bestimmen; und wobei
- die Vorrichtung dazu ausgebildet ist, Daten zu einer Spurbreite (P) aus den Daten zu Fahrspurmarkierungen (28, 28a, 28b, 28c) zu gewinnen, Daten zur Fahrbahnbreite (B) aus den Daten zu Objekten (30, 32, 10b) zu gewinnen und die Anzahl der Fahrspuren (38a, 38b, 38c, 38d) auf der Fahrbahn (24) aus den Daten zur Fahrbahnbreite (B) und zur Spurbreite (P) zu bestimmen und auszugeben.

10. Kraftwagen (10a) mit einer Vorrichtung nach Anspruch 9.

## Claims

1. Method for determining the position of a vehicle, in particular a motor vehicle (10a), on a carriageway (24), comprising the steps of:
- determining the position of the vehicle (10a) with a first precision using outputs from a satellite signal sensor (36); and
- obtaining data, from a digital map (12), relating to a first vehicle environment for the position determined with the first precision; and
- obtaining data relating to lane markings (28, 28a, 28b, 28c) in a second vehicle environment (E1) using a line recognition sensor (18); and
- obtaining data relating to the proper motion (T) of the vehicle (10a) using a driving dynamics sensor (14); and
- determining the number of lanes (38a, 38b, 38c, 38d) on the carriageway (24); and
- determining the position of the vehicle (10a) on the carriageway (24) with at least lane-specific precision,
**characterised by** the steps of
- obtaining data relating to objects (30, 32, 10b) in a third vehicle environment (E2) using an environment sensor (16); and
- determining the position of the vehicle (10a) by combining
- the data relating to the first vehicle environment from the digital map (12) and
- the data relating to the lane markings (28, 28a, 28b, 28c) in the
second vehicle environment (E1)
with
- the data relating to the proper motion (T) of the vehicle (10a) and
- the data relating to objects (30, 32, 10b) in the third vehicle environment (E2) depending on the conditions of the carriageway; and
- obtaining data relating to a lane width (P) from the data relating to lane markings (28, 28a, 28b, 28c);
- obtaining data relating to the carriageway width (B) from the data relating to objects (30, 32, 10b); and
- determining and outputting the number of lanes (38a, 38b, 38c, 38d) on the carriageway (24) from the data relating to the carriageway width (B) and to the lane width (P).

2. Method according to claim 1, **characterised in that** the information regarding the number of lanes (38a, 38b, 38c, 38d) is used to correct data in the digital map (12).

3. Method according to either of the preceding claims, **characterised in that** a piece of information based on the at least lane-specific position of the vehicle (10a) is output to a vehicle driver, in particular a piece of information relating to the number of lanes (38a, 38b, 38c, 38d) to be changed.

4. Method according to any of the preceding claims, **characterised in that** a search is made for at least one lane marking (28a, 28b) that is different from a carriageway edge marking (28c).

5. Method according to any of the preceding claims, **characterised in that** the data obtained from the digital map (12) relating to the first vehicle environment are data which include at least one piece of information relating to the number of lanes (38a, 38b, 38c, 38d) and/or relating to the bend of the carriageway (24) and/or relating to markings (28, 28a, 28b, 28c) on the carriageway (24) and/or relating to structural particularities on the carriageway (24).

6. Method according to any of the preceding claims, **characterised in that** the data obtained relating to lane markings (28, 28a, 28b, 28c) are data which include at least one piece of information relating to a position and/or a type and/or a bend and/or a length of a lane marking (28, 28a, 28b, 28c).

7. Method according to any of the preceding claims, **characterised in that** the data obtained relating to the proper motion (T) of the vehicle (10a) are data which include measurement data recorded at different times.

8. Method according to any of the preceding claims, **characterised in that** the data obtained relating to objects (30, 32, 10b) are data which include at least one piece of information relating to a position and/or a speed and/or a type of an object (30, 32, 10b).

9. Device for determining the position of a vehicle, in particular a motor vehicle (10a), on a carriageway (24), comprising:
- a satellite signal sensor (36) which provides signals for determining the position of the vehicle (10a) with a first precision;
- a digital map (12) having data relating to a first vehicle environment for the position determined with the first precision;
- a line recognition sensor (18) which provides data relating to lane markings (28, 28a, 28b, 28c) in a second vehicle environment (E1);
- a driving dynamics sensor (14) which provides data relating to the proper motion (T) of the vehicle (10a);
- a device which determines a number of lanes (38a, 38b, 38c, 38d) on the carriageway (24);
- a position determination unit (20) designed to determine the position of the vehicle (10a) with at least lane-specific precision on the carriageway (24), **characterised by**
- an environment sensor (16) which provides data relating to objects (30, 32, 10b) in a third vehicle environment (E2);
- the position determination unit (20) being designed to combine the data relating to the first vehicle environment from the digital map (12) and the data relating to the lane markings (28, 28a, 28b, 28c) in the second vehicle environment (E1) with the data relating to the proper motion (T) of the vehicle (10a) and the data relating to objects (30, 32, 10b) in the third vehicle environment (E2) and to thus determine the position of the vehicle (10a); and
- the device being designed to obtain data relating to a lane width (P) from the data relating to lane markings (28, 28a, 28b, 28c), to obtain data relating to the carriageway width (B) from the data relating to objects (30, 32, 10b) and to determine and output the number of lanes (38a, 38b, 38c, 38d) on the carriageway (24) from the data relating to the carriageway width (B) and to the lane width (P).

10. Motor vehicle (10a) comprising a device according to claim 9.

## Revendications

1. Procédé de détermination de la position d'un véhicule sur une chaussée de circulation (24), en particulier d'un véhicule automobile (10a), comprenant les étapes consistant à
- déterminer la position du véhicule (10a) avec une première précision sur la base de sorties provenant d'un capteur de signal de satellite (36) ;
- récupérer des données sur un premier champ ambiant du véhicule pour la position déterminée avec la première précision d'une carte numérique (12) ; et
- récupérer des données sur des marquages au sol (28, 28a, 28b, 28c) dans un deuxième champ ambiant du véhicule (E1) avec un capteur de reconnaissance de lignes (18) ; et
- récupérer des données sur le déplacement propre (T) du véhicule (10a) avec un capteur de dynamique de mouvement des véhicules (14) ; et
- déterminer le nombre de voies de circulation (38a, 38b, 38c, 38d) sur la chaussée de circulation (24) ; et
- déterminer la position du véhicule (10a) avec une précision au moins spécifique à la voie de circulation sur la chaussée de circulation (24), **caractérisé par** les étapes consistant à :
- récupérer des données sur des objets (30, 32, 10b) dans un troisième champ ambiant du véhicule (E2) avec un capteur de champ ambiant (16) ; et
- déterminer la position du véhicule (10a) par combinaison
- des données sur le premier champ ambiant du véhicule (10a) venant de la carte numérique (12) et
- des données sur les marquages au sol (28, 28a, 28b, 28c) dans le deuxième champ ambiant du véhicule (E1)
avec
- les données sur le déplacement propre (T) du véhicule (10a) et
- les données sur des objets (30, 32, 10b) dans le troisième champ ambiant du véhicule (E2),
en fonction de la situation de la chaussée de
circulation ; et
- récupérer des données sur une largeur de voie de circulation (P) à partir des données sur les marquages au sol (28, 28a, 28b, 28c) ;
- récupérer des données sur la largeur de chaussée de circulation (B) à partir des données sur des objets (30, 32, 10b) ; et
- déterminer et afficher le nombre de voies de circulation (38a, 38b, 38c, 38d) sur la chaussée de circulation (24) à partir des données sur la largeur de la chaussée de circulation (B) et sur la largeur de voie de circulation (P).

2. Procédé selon la revendication 1,
**caractérisé en ce que** :
les informations sur le nombre des voies de circulation (38a, 38b, 38c, 38d) sont utilisées pour corriger les données dans la carte numérique (12).

3. Procédé selon l'une quelconque des revendications
précédentes,
**caractérisé en ce que** :
une information basée sur la position du véhicule (10a) au moins précise au plan de la voie de circulation est affichée à un chauffeur du véhicule, en particulier une information sur un nombre de voies de circulation (38a, 38b, 38c, 38d) à échanger.

4. Procédé selon l'une quelconque des revendications
précédentes,
**caractérisé en ce que** :
l'on recherche au moins un marquage au sol (28a, 28b) qui soit différent d'un marquage marginal (28c) de la chaussée de circulation.

5. Procédé selon l'une quelconque des revendications
précédentes,
**caractérisé en ce que** :
à partir de la carte numérique (12), on récupère les données sur le premier champ ambiant du véhicule, qui comprennent au moins une indication sur le nombre de voies de circulation (38a, 38b, 38c, 38d) et/ou sur la courbure de la chaussée de circulation (24) et/ou sur les marquages (28, 28a, 28b, 28c) sur la chaussée de circulation (24) et/ou sur des particularités de construction sur la chaussée de circulation (24).

6. Procédé selon l'une quelconque des revendications
précédentes,
**caractérisé en ce que** :
l'on récupère les données sur les marquages au sol (28, 28a, 28b, 28c) qui comprennent au moins une indication sur la position et/ou sur le type et/ou la courbure et/ou une longueur d'un marquage au sol (28, 28a, 28, 28c).

7. Procédé selon l'une quelconque des revendications
précédentes,
**caractérisé en ce que** :
l'on récupère les données sur le déplacement propre (T) du véhicule (10a) qui comprennent des mesures qui ont été reçues à différents moments.

8. Procédé selon l'une quelconque des revendications
précédentes,
**caractérisé en ce que** :
l'on récupère des données sur des objets (30, 32, 10b) qui comprennent au moins une indication sur une position et/ou sur une vitesse et/ou sur un type d'un objet (30, 32, 10b).

9. Dispositif de détermination de la position d'un véhicule sur une chaussée de circulation (24), en particulier d'un véhicule automobile (10a), comprenant :
- un capteur de signal de satellite (36), qui émet des signaux pour déterminer la position du véhicule (10a) avec une première précision ;
- une carte numérique (12) avec des données sur un premier champ ambiant de véhicule pour la position déterminée avec la première précision ;
- un capteur de reconnaissance de lignes (18) qui fournit des données vis-à-vis de marquages au sol (28, 28a, 28b, 28c) dans un deuxième champ ambiant du véhicule (E1) ;
- un capteur de dynamique de mouvement de véhicules (14) qui fournit des données vis-à-vis du mouvement propre (T) du véhicule (10a) ;
- un dispositif qui détermine un nombre de voies de circulation (38a, 38b, 38c, 38d) sur la chaussée de circulation (24) ; et
- une unité de détermination de position (20) qui est conformée de manière à déterminer la position du véhicule (10a) avec une précision au moins spécifique à la voie de circulation sur la chaussée de circulation (24) ;
**caractérisé par** :
- un capteur de champ ambiant (16), qui émet des données sur des objets (30, 32, 10b) dans un troisième champ ambiant de véhicule (E2) ; dans lequel :
- l'unité de détermination de position (20) est conformée de manière à combiner les données sur le premier champ ambiant du véhicule provenant de la carte numérique (12) et les données sur les marquages au sol (28, 28a, 28b, 28c) dans le deuxième champ ambiant (E1) du véhicule avec les données sur le mouvement propre (T) du véhicule (10a) et les données sur des objets (30, 32, 10b) dans le troisième champ ambiant (E2) du véhicule et déterminer ainsi la position du véhicule (10a) ; et dans lequel :
le dispositif est conformé de manière à récupérer des
données sur une largeur de voie (P) à partir des données sur les marquages au sol (28, 28a, 28b, 28c), de manière à récupérer des données sur la largeur (B) de la chaussée de circulation à partir des données sur des objets (30, 32, 10b) et de déterminer et d'afficher le nombre des voies de circulation (38a, 38b, 38c, 38d) sur la chaussée de circulation (24) à partir des données sur la largeur (B) de la chaussée de circulation et sur la largeur (P) des voies.

10. Véhicule automobile (10a) comprenant un dispositif selon la revendication 9.
